(19) **Europäisches Patentamt / European Patent Office / Office européen des brevets**

(11) **EP 3 206 866 B1**

(12) **FASCICULE DE BREVET EUROPEEN**

(45) Date de publication et mention de la délivrance du brevet:
**29.04.2020 Bulletin 2020/18**

(51) Int Cl.:
**B32B 1/08** *(2006.01)*     **B32B 27/32** *(2006.01)*
**F16L 11/08** *(2006.01)*

(21) Numéro de dépôt: **15787484.3**

(22) Date de dépôt: **08.10.2015**

(86) Numéro de dépôt international:
**PCT/EP2015/073317**

(87) Numéro de publication internationale:
**WO 2016/058908 (21.04.2016 Gazette 2016/16)**

(54) **CONDUITE FLEXIBLE SOUS-MARINE COMPRENANT UNE COUCHE COMPRENANT UN POLYÉTHYLÈNE À RÉSISTANCE THERMIQUE ACCRUE RÉTICULÉ**

FLEXIBLE UNTERWASSERRÖHRE MIT EINER SCHICHT MIT VERNETZTEM POLYETHYLEN MIT HOHER WÄRMEBESTÄNDIGKEIT

FLEXIBLE UNDERWATER PIPE INCLUDING A LAYER INCLUDING A CROSS-LINKED POLYETHYLENE WITH INCREASED THERMAL RESISTANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2014 FR 1459856**

(43) Date de publication de la demande:
**23.08.2017 Bulletin 2017/34**

(73) Titulaire: **Technip France**
**92400 Courbevoie (FR)**

(72) Inventeur: **TRONC, Frédéric**
**F-76480 Saint-Pierre-de-Varengeville (FR)**

(74) Mandataire: **Lavoix**
**2, place d'Estienne d'Orves**
**75441 Paris Cedex 09 (FR)**

(56) Documents cités:
DE-C1- 10 146 406     DE-U1- 20 218 027
FR-A1- 2 994 242     US-A1- 2010 218 839

## Description

La présente invention est définie dans les revendications en annexe. Elle concerne une conduite flexible sous-marine de type non lié destinée au transport des hydrocarbures en eau profonde.

Les conduites flexibles de transport des hydrocarbures comportent généralement, de l'extérieur vers l'intérieur de la conduite :

- une gaine polymérique externe d'étanchéité pour protéger l'ensemble de la conduite et notamment pour empêcher l'eau de mer de pénétrer dans son épaisseur,
- des nappes d'armures de traction,
- une voûte de pression,
- une gaine polymérique interne d'étanchéité, et
- éventuellement une carcasse métallique (figure).

Si la conduite comprend une carcasse métallique, elle est dite à passage non lisse ("rough-bore" en langue anglaise). Si la conduite est exempte de carcasse métallique, elle est dite à passage lisse ("smooth-bore" en langue anglaise). Généralement, pour le transport d'hydrocarbures, une conduite comportant une carcasse est préférée, alors qu'une conduite exempte de carcasse sera adaptée pour le transport d'eau et/ou de vapeur d'eau sous pression.

La carcasse métallique et la voûte de pression sont constituées d'éléments longitudinaux enroulés à pas court, et elles confèrent à la conduite sa résistance aux efforts radiaux tandis que les nappes d'armures de traction sont constituées de fils métalliques enroulés selon des pas longs pour reprendre les efforts axiaux.

La nature, le nombre, le dimensionnement et l'organisation des couches constituant les conduites flexibles sont essentiellement liés à leurs conditions d'utilisation et d'installation. Les conduites peuvent comprendre des couches polymériques et/ou métalliques et/ou composites supplémentaires à celles susmentionnées.

Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 60°, typiquement compris entre 20° et 60° pour les nappes d'armures.

Ces conduites flexibles conviennent notamment au transport de fluides, notamment d'hydrocarbures dans les fonds marins et ce, à de grandes profondeurs. Plus précisément elles sont dites de type non lié ("unbonded" en anglais) et elles sont ainsi décrites dans les documents normatifs publiés par l'American Petroleum Institute (API), API 17J (3ème édition - 1er janvier 2009) et API RP 17B (3ème édition - mars 2002).

Les conduites flexibles peuvent être utilisées à grande profondeur, typiquement jusqu'à 3000 mètres de profondeur. Elles permettent le transport de fluides, notamment d'hydrocarbures, ayant une température atteignant typiquement 130°C et pouvant même dépasser les 150°C et une pression interne pouvant atteindre 1000 bars, voire 1500 bars.

Le matériau constitutif de la gaine polymérique d'étanchéité interne ou externe doit être stable chimiquement et capable de résister mécaniquement au fluide transporté et à ses caractéristiques (composition, température et pression). Le matériau doit combiner des caractéristiques de ductilité, de longévité (généralement, la conduite doit avoir une durée de vie d'au moins 20 ans), de résistance mécanique, à la chaleur et à la pression. Le matériau doit notamment être inerte chimiquement vis-à-vis des composés chimiques constituant le fluide transporté. Typiquement, les hydrocarbures transportés comprennent du pétrole brut, de l'eau et des gaz sous pression.

Divers matériaux polymères tels que des polyoléfines, des polyamides ou encore des polymères fluorés sont utilisés dans la gaine polymérique interne ou externe d'étanchéité, et en particulier le polyéthylène (PE), réticulé ou non. Le polyéthylène peut notamment être du polyéthylène haute densité (PEHD).

Néanmoins, une gaine à base de polyéthylène peut être sujette au phénomène de cloquage (« blistering » en anglais). Dans une conduite flexible, la gaine d'étanchéité en matériau polymère est utilisée pour transporter des fluides composés de pétrole brut, d'eau et de gaz sous pression et en température. Dans ces conditions d'utilisation, le matériau polymère de la gaine d'étanchéité absorbe les gaz contenus dans le fluide pétrolier en fonction de leur nature chimique (via leur coefficient de solubilité) et de la pression partielle de chacun d'eux. Le temps de saturation du polymère, la mise en équilibre du système, dépend quant à lui des coefficients de diffusion et donc essentiellement de la température. Si la pression dans la conduite flexible vient à diminuer, les gaz absorbés tendent à s'extraire du polymère afin de maintenir l'équilibre entre les concentrations interne et externe. Si la rupture de l'équilibre est très rapide, plus rapide que la vitesse de diffusion des gaz hors du polymère (comme dans le cas d'arrêt de production ou « shutdown » en anglais), le système n'est plus à l'équilibre. La sursaturation de gaz dans la gaine de polymère conduit à des gradients de concentration en gaz et de température qui peut engendrer l'expansion plus ou moins importante et brutale des gaz (« rapid gas décompression » en anglais) pouvant générer des endommagements irréversibles tels que l'apparition de cloques ou de fissures ou encore la formation d'une microporosité uniformément répartie dans l'épaisseur du matériau. Ainsi, l'apparition de cloques est due au piégeage de gaz solubles au sein de la gaine ou à la décompression trop rapide de la conduite ne permettant pas au gaz de diffuser hors de la gaine. Ce phénomène de cloquage peut être catastrophique pour la gaine d'étanchéité, et donc pour la conduite flexible qui la contient, puisqu'il peut conduire à la perte de sa fonction d'étanchéité.

Typiquement, le phénomène de cloquage est observé pour une gaine d'étanchéité à base de polyéthylène, réticulé ou non, au contact d'un fluide pétrolier comportant des gaz corrosifs pouvant diffuser au sein de la gaine, sous pression élevée (supérieur à 200 bars) à une température de l'ordre de 60°C pour les polyéthylènes non réticulés, et 90°C pour les polyéthylènes réticulés. Ainsi, pour garantir une durée de vie d'au moins 20 ans de la conduite flexible, pour une pression de 200 bars, une conduite flexible dont une gaine d'étanchéité est en polyéthylène non réticulé ou réticulé ne peut être utilisée à des températures respectivement supérieures à 60°C et 90°C.

Par conséquent, des matériaux polymériques alternatifs au polyéthylène ont été développés pour la gaine polymérique interne ou externe d'étanchéité, notamment :

- le polyamide (PA), notamment le polyamide 11. Contrairement au polyéthylène, le polyamide possède une bonne résistance au cloquage, ainsi qu'une faible tendance au gonflement lorsqu'il est au contact du fluide pétrolier. Le polyamide est généralement utilisé pour des conditions de transport d'hydrocarbures pour lesquelles la pression est élevée et où la température peut s'élever jusqu'à 110°C.
  En revanche, un des inconvénients du polyamide est qu'il a tendance à s'hydrolyser en présence d'eau (souvent contenu dans les bruts de production). L'hydrolyse est rapide lorsqu'il est soumis à des températures (de l'ordre de 110°C et plus) et à des valeurs de pH élevées (pH supérieur à 7). Un autre inconvénient est son coût d'achat qui est sensiblement plus important que celui du polyéthylène.
- le polyfluorure de vinylidène (PVDF) (qui contient plus ou moins de plastifiant suivant le grade utilisé) possède une très bonne inertie chimique. Les gaines à base de PVDF peuvent supporter des pressions en service élevées ainsi que des températures pouvant atteindre 130°C-150°C.
  Son inconvénient majeur reste son prix, bien plus élevé que celui du polyéthylène ou du polyamide.

Ainsi, les gaines polymériques d'étanchéité interne ou externe à base de polyamide ou de polyfluorure de vinylidène subissent moins de phénomène de cloquage que des gaines à base de polyéthylène, réticulé ou non, mais elles sont plus coûteuses, et plus sujettes à une dégradation par hydrolyse dans le cas d'une gaine à base de polyamide.

Pour minimiser les coûts, on cherche à développer des gaines polymériques d'étanchéité interne ou externe à base de polyéthylène, mais présentant une bonne résistance au cloquage.

Dans ce cadre, la Demanderesse a développé des gaines polymériques comprenant du polyéthylène à résistance thermique accrue (PE-RT) non réticulé, comme décrit dans la demande WO 2014/020053. De telles gaines polymériques présentent en effet une résistance améliorée au phénomène de cloquage. Cela étant, on a constaté que le taux de gonflement de ces gaines est important lorsqu'elles sont mises en présence de fluides pétroliers circulant dans la conduite sous-marine à des températures supérieures à 90°C. Un taux de gonflement élevé s'accompagne de propriétés mécaniques amoindries et de contraintes importantes qui peuvent s'exercer sur les autres couches de la conduite flexible sous-marine et endommager alors son intégrité.

La Demande WO2014/020052 décrit une conduite flexible sous marine comprenant une gaine polymérique interne et/ou externe d'étanchéité comprenant un polyéthylène à haut poids moléculaire. Les polyéthylènes à haut poids moléculaire peuvent être réticulés ou non.

Le développement de gaines polymériques interne, intermédiaire et/ou externe d'étanchéité alternatives présentant à la fois une bonne résistance au cloquage et un taux de gonflement plus faible est donc recherché.

Un des objectifs de la présente invention est de fournir une conduite flexible sous-marine pour le transport d'hydrocarbures dont la gaine polymérique interne, intermédiaire et/ou externe d'étanchéité subit moins, voire pas du tout, de phénomène de cloquage et ayant un taux de gonflement plus faible que ceux observés lorsqu'une gaine à base de polyéthylène à résistance thermique accrue (PE-RT) non réticulé est utilisée.

A cet effet, selon un premier objet, l'invention concerne une conduite flexible sous-marine destinée au transport d'hydrocarbures, comprenant une pluralité de couches dont au moins une couche comprend un polyéthylène à résistance thermique accrue (PE-RT) réticulé.

L'inventeur a en effet découvert qu'une couche comprenant un PE-RT réticulé :

- subit moins, voire pas du tout, de phénomène de cloquage qu'une couche à base de polyéthylène, réticulé ou non, utilisé actuellement comme gaine d'étanchéité d'une conduite flexible, et ce même à des températures et/ou pressions plus élevées, et
- présente un taux de gonflement lorsqu'elle est mise en présence de fluide pétroliers moins important qu'une couche comprenant un PE-RT non réticulé.

Une telle couche est donc particulièrement adaptée pour être utilisée comme gaine d'étanchéité dans une conduite flexible.

Dans la littérature, comme par exemple dans l'article de Kawaguchi et al. « development of low-cost and recyclable of polyethylene pipes for heating » présenté à l' "international gas union research conférence" de 2008, les PE-RT sont généralement décrits comme étant des polyéthylènes alternatifs aux polyéthylènes réticulés, les PE-RT présentant une bonne résistance à la température sans qu'une réticulation ne soit nécessaire. Réticuler un PE-RT pour obtenir les avantages susmentionnés n'était donc pas une démarche usuelle pour l'homme du métier.

La conduite flexible sous-marine selon l'invention comprend au moins une couche obtenue par réticulation d'au moins un PE-RT non réticulé, qui est défini ci-après.

Les polyéthylènes à résistance thermique accrue ou polyéthylènes à résistance thermique majorée (« polyethylene raised temperature » ou « polyethylene of raised temperature » ou « polyethylene of raised temperature resistance » - PE-RT en anglais) sont définis dans les normes ASTM F2769-10 révisée en 2010, ASTM F2623 révisée en 2008 ou les standards ISO 1043-1 révisé en 2011, ISO 24033 révisée en 2009 et ISO 22391 révisé en 2009 et par le standard ISO 15494 révisée en 2003 pour les applications.

Des PE-RT réticulés obtenus par réticulation d'au moins un PE-RT de type I ou de type II peuvent être utilisés dans la couche de la conduite, ceux obtenus par réticulation de PE-RT de type II (de densité plus élevée) étant préférés car ils résistent généralement mieux à de haute pressions et/ou températures.

Les PE-RT non réticulés sont des polyéthylènes de haute densité (« high density polyethylene » - HDPE en anglais) obtenus par polymérisation en présence de catalyseurs spécifiques d'éthylène et d'un ou plusieurs co-monomères α-oléfine comportant au moins trois atomes de carbone, généralement de 3 à 14 atomes de carbone, préférentiellement de 4 à 12 atomes de carbone, plus préférentiellement de 6 à 10 atomes de carbone et encore plus préférentiellement de 6 à 8 atomes de carbone (ce qui conduit à des PE-RT dont les chaînes latérales ont généralement de 1 à 12 atomes de carbone, préférentiellement de 2 à 10 atomes de carbone, plus préférentiellement de 4 à 8 atomes de carbone et encore plus préférentiellement de 4 à 6 atomes de carbone). Ainsi les co-monomères polymérisés en présence de l'éthylène peuvent être le propylène, le 1-butène, l'isobutylène, le 4-méthyl-1-pentène, le 1-hexène, le 1-octène, le 1-décène. La couche de la conduite flexible selon l'invention comprend typiquement un PE-RT réticulé obtenu par réticulation d'un PE-RT (non réticulé) obtenu par polymérisation d'éthylène et d'une α-oléfine choisie parmi le 1-butène, le 1-hexène et le 1-octène, notamment le 1-hexène et le 1-octène, de préférence le 1-hexène. De tels PE-RT ont donc des chaînes latérales éthyle, n-butyle ou n-hexyle, de préférence n-butyle ou n-hexyle.

La couche comprenant un PE-RT réticulé de la conduite selon l'invention peut être obtenue par réticulation d'un seul PE-RT non réticulé, mais aussi par réticulation d'un mélange de plusieurs PE-RT non réticulés, typiquement par réticulation de deux PE-RT non réticulés. Par exemple, le PE-RT réticulé peut être obtenu par réticulation d'un mélange de PE-RT (non réticulés) comprenant :

- un PE-RT (non réticulé) obtenu par polymérisation d'éthylène et de 1-hexène, et

- un PE-RT (non réticulé) obtenu par polymérisation d'éthylène et de 1-octène.

Des procédés de préparation de PE-RT non réticulés, mettant en œuvre des catalyseurs spécifiques, sont connus de la littérature, et sont par exemple décrits dans les demandes de brevet EP 0416 815, WO 94/03509, EP 0 100 879. L'utilisation de catalyseurs dédiés permet d'obtenir des copolymères issus des monomères éthylène / α-oléfine et dont les structures moléculaires (distribution contrôlée du co-monomère) et cristallines leur confèrent des performances élevées en termes de résistance à la pression hydrostatique jusqu'à des températures élevées pour des polyoléfines non réticulées. Ces performances font que les PE-RT sont utilisés principalement dans les canalisations pour le transport d'eau froide et chaude sous pression, aussi bien pour des applications domestiques qu'industrielles.

Typiquement, les PE-RT réticulés utilisés dans la couche de la conduite flexible selon l'invention sont obtenus par réticulation d'au moins un PE-RT (non réticulé) ayant :

- une densité (selon ASTM D1505 révisée en 2010 ou ISO 1183 révisée en 2012) comprise entre 0,930 $g/cm^3$ et 0,965 $g/cm^3$, préférentiellement entre 0,935 $g/cm^3$ et 0,960 $g/cm^3$ et encore plus préférentiellement entre 0,940 $g/cm^3$ et 0,955 $g/cm^3$,

- un melt index (selon ASTM D1238 révisée en 2010 ou ISO 1133 révisée en 2011) mesuré à 190°C sous une masse de 2,16kg compris entre 0,1 g/10 minutes et 15g/10 minutes, préférentiellement entre 0,1 g/10 minutes et 5 g/10 minutes et de manière encore plus préférentielle entre 0,1 g/10 minutes et 1,5g/10 minutes,

- une force de traction au seuil (« tensile yield strength » en anglais) (selon ASTM D638 révisée en 2010 ou ISO 527-2 révisée en 2012) comprise entre 15 et 35 MPa, préférentiellement entre 20 et 30 MPa et encore plus préférentiellement entre 25 et 30 MPa, et

- un allongement à la rupture (selon ASTM D638 révisée en 2010 ou ISO 527-2 révisée en 2012) au moins supérieur à 50%, de manière préférentielle supérieur à 300% et de manière encore plus préférentielle supérieure ou égale à 500%.

Le PE-RT réticulé utilisé dans la couche de la conduite flexible selon l'invention est obtenu par réticulation d'au moins un PE-RT (non réticulé) commercialisé notamment par Dow Chemical (Dowlex 2377, Dowlex 2388, Dowlex 2344, DGDA-2399), par Total Petrochemical (XSene XRT70), par Chevron Phillips (Marlex HP076, HHM4903), par Exxon Mobil (HD6704) par Lyondellbasell (Hostalen 4731 B) et par Ineos (Eltex-TUB220-RT).

Un PE-RT réticulé utilisé dans la couche de la conduite flexible selon l'invention obtenu par réticulation d'au moins un PE-RT (non réticulé) ayant :

- un melt index (selon ASTM D1238 révisée en 2010 ou ISO 1133 révisée en 2011) mesuré à 190°C sous une masse de 5,0 kg inférieur à 2,0 g/10 min, et
- une densité (selon ASTM D1505 révisée en 2010 ou ISO 1183 révisée en 2012) supérieure à 0,945 g/cm$^3$,

est particulièrement préféré, car la couche comprenant un tel PE-RT réticulé résiste particulièrement bien au phénomène de cloquage, et ce même aux pressions et températures élevées rencontrées lors de l'utilisation d'une conduite flexible comprenant une telle couche pour le transport sous-marin d'hydrocarbures. Typiquement, une telle couche peut en effet résister au phénomène de cloquage à des pressions supérieures à 400 bars et des températures supérieures à 90°C. Les inventeurs ont mis en évidence que des cloques apparaissent généralement à des températures et pressions plus faibles lorsqu'une couche comprenant un PE-RT réticulé obtenu à partir d'un PE-RT (non réticulé) ne présentant pas ces caractéristiques de densité et/ou de melt index est utilisée.

De préférence, les forces de traction au seuil et les allongements à la rupture des PE-RT utilisés avant réticulation sont conformes à ceux décrits ci-dessus.

Parmi les PE-RT réticulés utilisés dans la couche de la conduite flexible selon l'invention, on préfère ceux obtenus par réticulation d'au moins un PE-RT (non réticulé) de densité supérieure à 0,945 g/cm$^3$, dont le melt index (selon ASTM D1238 révisée en 2010 ou ISO 1133 révisée en 2011) mesuré à 190°C sous une masse de 5,0 kg est inférieur à 1,0 g/10 min, car la résistance au phénomène de cloquage d'une couche les comprenant est accentuée. Généralement, le melt index mesuré à 190°C sous une masse de 2,16 kg est alors inférieur à 0,25 g/10 min et/ou le melt index mesuré à 190°C sous une masse de 21,6 kg est inférieur à 20 g/10 min.

Ces PE-RT non réticulés sont commercialisés notamment par Dow Chemical (DGDA-2399), par Total Petrochemical (XSene XRT70), par Chevron Phillips (HHM-TR457) et par Lyondellbasell (Hostalen 4731 B).

La couche comprenant un PE-RT réticulé de la conduite flexible peut être une monocouche ou une multicouche. Dans un mode de réalisation, la couche comprenant un PE-RT réticulé de la conduite flexible est une multicouche comprenant plusieurs couches polymériques, où au moins l'une des couches polymériques comprend un PE-RT réticulé. Une telle multicouche est généralement préparée par co-extrusion.

La couche comprenant un PE-RT réticulé de la conduite selon l'invention comprend typiquement :

- une matrice polymérique, et
- éventuellement des composants dispersés de façon discontinue dans la matrice polymérique.

Par « matrice polymérique », on entend la phase continue polymérique qui forme la couche. La matrice polymérique est une matrice continue. La couche peut éventuellement comprendre des composants dispersés de façon discontinue dans la matrice polymérique, mais qui ne font pas partie de la matrice polymérique. De tels composants peuvent par exemple être des charges telles que des fibres.

La matrice polymérique de la couche est généralement obtenue par extrusion d'un ou de plusieurs polymères (qui formeront la matrice polymérique) et éventuellement d'additifs (mélange maître). Lors de l'extrusion, certains additifs sont incorporés dans la matrice polymérique, alors que d'autres ne se mélangent pas avec les polymères formant la matrice polymérique et forment des composants dispersés de façon discontinue dans la matrice polymérique.

Selon une première alternative, la conduite selon l'invention comprend au moins une couche dont la matrice polymérique comprend un PE-RT réticulé.

Selon cette alternative, la couche dont la matrice polymérique comprend un PE-RT réticulé est généralement obtenue par extrusion puis réticulation d'un ou de plusieurs polymères (qui formera(ont) la matrice polymérique), l'un d'eux étant du PE-RT non réticulé, et éventuellement en présence d'additifs.

Les composants dispersés de façon discontinue dans la matrice polymérique peuvent éventuellement comprendre des polymères, par exemple du PE-RT réticulé ou non réticulé. Cela étant, une conduite flexible :

- comprenant une couche comprenant un composant dispersé de façon discontinue dans la matrice polymérique (notamment des charges telles que des fibres) comprenant ou composée de PE-RT réticulé,
- mais dont la matrice polymérique est exempte de PE-RT réticulé,

ne répond pas à la définition d'une conduite comprenant au moins une couche dont la matrice polymérique comprend un PE-RT réticulé, telle que définie dans cette première alternative.

Selon une deuxième alternative, la conduite selon l'invention comprend au moins une couche comprenant un composant dispersé de façon discontinue dans la matrice polymérique, ledit composant comprenant un PE-RT réticulé.

Selon cette deuxième alternative, un composant dispersé de façon discontinue dans la matrice polymérique de la couche comprend un PE-RT réticulé. Le composant peut être une charge telle qu'une fibre. Le composant comprenant le PE-RT réticulé est généralement un des additifs du mélange maitre utilisé lors de l'extrusion. Selon cette deuxième alternative, la matrice polymérique de la couche peut être exempte de PE-RT réticulé.

Selon une troisième alternative, la conduite selon l'invention comprend au moins une couche comprenant un composant dispersé de façon discontinue dans la matrice polymérique, ledit composant comprenant un PE-RT réticulé et dont la matrice polymérique comprend un PE-RT réticulé.

Selon cette troisième alternative, le PE-RT réticulé est donc présent à la fois dans la matrice polymérique et dans un composant dispersé de façon discontinue dans la matrice polymérique.

Dans un mode de réalisation, dans la conduite flexible selon l'invention, la couche comprend, en plus du PE-RT réticulé, une autre polyoléfine. Typiquement, c'est la matrice polymérique de la couche qui comprend, en plus du PE-RT réticulé, au moins une autre polyoléfine. Par « autre polyoléfine », on entend que la polyoléfine n'est pas un PE-RT réticulé. L'autre polyoléfine peut être réticulée ou non réticulée.

Le PE-RT réticulé peut alors être le polymère majoritaire (dans la couche de la conduite, le rapport massique entre le PE-RT réticulé et la somme du PE-RT réticulé et de l'autre polyoléfine étant alors supérieur à 50%) ou minoritaire (dans la couche de la conduite, le rapport massique entre le PE-RT réticulé et la somme du PE-RT réticulé et de l'autre polyoléfine étant alors inférieur à 50%). Un rapport massique PE-RT réticulé / autre polyoléfine de 50/50 est bien sûr également possible.

L'autre polyoléfine de la couche peut être un polyéthylène haute densité (HDPE), de préférence un PE-RT non réticulé tel que décrit ci-dessus, c'est-à-dire ayant :

- une densité (selon ASTM D1505 révisée en 2010 ou ISO 1183 révisée en 2012) comprise entre 0,930 g/cm$^3$ et 0,965 g/cm$^3$, préférentiellement entre 0,935 g/cm$^3$ et 0,960 g/cm$^3$ et encore plus préférentiellement entre 0,940 g/cm$^3$ et 0,955 g/cm$^3$,
- un melt index (selon ASTM D1238 révisée en 2010 ou ISO 1133 révisée en 2011) mesuré à 190°C sous une masse de 2,16kg compris entre 0,1 g/10 minutes et 15 g/10 minutes, préférentiellement entre 0,1 g/10 minutes et 5 g/10 minutes et de manière encore plus préférentielle entre 0,1 g/10 minutes et 1,5 g/10 minutes,
- une force de traction au seuil (selon ASTM D638 révisée en 2010 ou ISO 527-2 révisée en 2012) comprise entre 15 et 35 MPa, préférentiellement entre 20 et 30 MPa et encore plus préférentiellement entre 25 et 30 MPa, et
- un allongement à la rupture (selon ASTM D638 révisée en 2010 ou ISO 527-2 révisée en 2012) au moins supérieur à 50%, de manière préférentielle supérieur à 300% et de manière encore plus préférentielle supérieure ou égale à 500%.

L'autre polyoléfine de la couche peut également être un polyéthylène à haut poids moléculaire, typiquement à très haut poids moléculaire, de préférence à ultra haut poids moléculaire.

Par exemple, dans la conduite flexible selon l'invention, la couche peut comprendre un polyéthylène à ultra haut poids moléculaire et un PE-RT réticulé obtenu par réticulation d'au moins un PE-RT (non réticulé) obtenu par polymérisation d'éthylène et de 1-hexène. De préférence, ledit PE-RT réticulé est majoritaire dans la couche. Par exemple, le rapport massique (PE-RT réticulé obtenu par réticulation d'au moins un PE-RT (non réticulé) obtenu par polymérisation d'éthylène et de 1-hexène) / (polyéthylène à ultra haut poids moléculaire) est de 75/25.

Au sens de la présente demande, un polyéthylène :

- à haut poids moléculaire (« high molecular weight polyethylene » (HMWPE ou HMwPE) en anglais) a une masse moléculaire moyenne en masse (Mw) supérieure à 400 000 g/mol,
- à très haut poids moléculaire (« very high molecular weight polyethylene » (VHMWPE ou VHMwPE) en anglais) a une masse moléculaire moyenne en masse (Mw) supérieure à 500 000 g/mol (par exemple le polyéthylène haute densité GHR8110 de Ticona dont la masse moléculaire moyenne en masse (Mw) est de l'ordre de 600 000 g/mol), de préférence supérieure à 1 000 000 g/mol,
- à ultra haut poids moléculaire (« ultra high molecular weight polyethylene » (UHMWPE ou UHMwPE) en anglais) a une masse moléculaire moyenne en masse (Mw) supérieure à 3 000 000 g/mol.

Au sens de la demande, un polyéthylène à haut poids moléculaire / très haut poids moléculaire / ultra haut poids moléculaire est un homopolymère d'éthylène, ou un copolymère d'éthylène contenant moins de 40% en poids, de préférence moins de 20% en poids d'unités issues de monomères α-oléfines comprenant de 3 à 10 atomes de carbone, telles que le propylène, le 1-butène, le 4-méthyl-2-pentène, le 1-hexène, le 1-octène ou le 1-décène.

Ces polyéthylènes à haut poids moléculaire / très haut poids moléculaire / ultra haut poids moléculaire sont disponibles commercialement. On peut par exemple citer les grades GUR® de Ticona, Montell 1900, 1900H de Lyondell, les grades 3040, 4040, 5040 et 6540 de Braskern et le grade Stamylan® UH034 de DSM.

Les polyéthylènes à haut poids moléculaire peuvent être réticulés ou non.

L'autre polyoléfine de la couche peut également être une polyoléfine obtenue par polymérisation d'un mélange d'oléfines comprenant au moins une β-oléfine.

Généralement, dans la conduite flexible, la couche comprenant un PE-RT réticulé comprend des additifs, tels que antioxydants, anti-UV, lubrifiants et autres charges usuellement utilisées dans les thermoplastiques. Ces charges peuvent être sphériques, tubulaires, fibrillaires ou lamellaires. On peut ainsi citer le noir de carbone, les particules d'oxyde de silice, d'oxyde de titane ou d'oxydes métalliques, des nanotubes d'argile ou de carbone, de type fibrillaire, ou de forme lamellaire. Ces charges peuvent être nanométriques ou non.

La conduite flexible selon l'invention peut comprendre une couche constituée de :

- un PE-RT réticulé,
- éventuellement une autre polyoléfine, notamment telle que définie ci-dessus, et
- éventuellement des additifs, tels que des antioxydants, des anti-UV, des lubrifiants et des charges.

Une conduite flexible comprenant une couche comprenant un PE-RT réticulé présente les avantages suivants :

- la couche comprenant un PE-RT réticulé résiste mieux au cloquage qu'une couche comprenant un polyéthylène classique, réticulé ou non. Par conséquent, une conduite flexible comprenant une couche comprenant un PE-RT réticulé peut être utilisée à des températures et/ou pressions supérieures à celles utilisées pour une conduite flexible comprenant une couche à base de polyéthylène non réticulé ou à base de polyéthylène réticulé.
- la couche comprenant un PE-RT réticulé mise en présence de fluides pétroliers à des températures supérieures à 90°C présente un taux de gonflement moindre qu'une couche comprenant un PE-RT non réticulé soumises aux mêmes conditions. Par conséquent, les contraintes générées par la couche comprenant un PE-RT réticulé sur les autres couches de la conduite sous-marine sont moindres que celles générées par une couche comprenant un PE-RT non réticulé. Les autres couches de la conduite sous-marine peuvent ainsi être avantageusement les couches usuellement utilisées. La procédure pour déterminer le taux de gonflement (massique et volumique) est la procédure standard, à savoir que premièrement l'échantillon de matière est pesé (masse $m_0$) et mesuré (volume $v_0$) puis est immergé dans le fluide à la température d'étude. L'échantillon est prélevé après différents temps d'immersion et pesé. Lorsque la masse de l'échantillon n'augmente plus avec le temps d'immersion, on considère que l'échantillon est saturé en fluide et qu'il est à l'équilibre. On note sa masse $m_{eq}$ et on mesure son volume $v_{eq}$. Les taux de gonflement maximaux en masse (M) et volume (V) sont donnés par les équations suivantes :

$$M\ (\%) = (m_{eq} / m_0) \times 100$$

$$V\ (\%) = (v_{eq} / v_0) \times 100$$

- la couche comprenant un PE-RT réticulé présente une meilleure résistance au fluage qu'une couche à base de polyéthylène non réticulé ou à base de polyéthylène réticulé. Un fluage important d'une couche polymérique est problématique dans une conduite flexible sous-marine car la couche polymérique s'étend alors dans les déjoints de la couche métallique supérieure dans la conduite sous-marine, ce qui risque d'endommager la couche polymérique (éventuellement en nuisant à son étanchéité) et/ou la couche métallique supérieure.La conduite flexible sous-marine selon l'invention comprend une pluralité de couche, c'est-à-dire au moins deux couches. Typiquement, la conduite flexible sous-marine selon l'invention comprend, de l'extérieur vers l'intérieur :

- une gaine polymérique externe d'étanchéité,
- au moins une nappe d'armures de traction (généralement deux),
- une voûte de pression,
- une gaine polymérique interne d'étanchéité,
- éventuellement une carcasse métallique,

et éventuellement une ou plusieurs gaine(s) polymérique(s) d'étanchéité intermédiaire(s) entre deux couches adjacentes,
étant entendu qu'au moins l'une de ces couches comprend un PE-RT réticulé.

La couche comprenant un PE-RT réticulé est au moins l'une des couches (généralement une gaine polymérique) de la conduite flexible.

La conduite flexible sous-marine selon l'invention peut comprendre d'autres couches en plus de celles susmentionnées. Par exemple, elle peut comprendre :

- une frette réalisée par l'enroulement à pas court d'au moins un fil métallique avantageusement de section transversale autour de la voûte de pression pour augmenter la résistance à l'éclatement de la conduite, et/ou
- une couche de maintien telle qu'une bande en aramide à résistance mécanique élevée (Technora® ou Kevlar®) entre la gaine polymérique externe et les nappes d'armures de traction, ou entre deux nappes d'armures de traction, et/ou
- et éventuellement une ou plusieurs couches anti-usure (" anti-wear layer " en anglais) en matériau polymérique tel qu'un polyamide plastifié ou non en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO 2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

Dans une conduite flexible sous-marine selon l'invention, la(es) couche(s) comprenant un PE-RT réticulé peu(ven)t notamment être :

- la gaine polymérique interne d'étanchéité, et/ou
- une ou plusieurs gaine(s) polymérique(s) intermédiaire(s) d'étanchéité située(s) entre deux autres couches adjacentes, et/ou
- la gaine polymérique externe d'étanchéité.

Dans un mode de réalisation, la gaine polymérique intermédiaire d'étanchéité située entre deux autres couches adjacentes et comprenant un PE-RT réticulé est une couche anti-usure.

En effet, comme explicité ci-dessus, la couche comprenant un PE-RT réticulé subit moins de phénomène de cloquage est donc particulièrement adaptée à être utilisée comme gaine polymérique d'étanchéité (pour éviter d'une part la fuite dans la mer d'hydrocarbures à travers les fissures ou cloques formées et d'autre part l'entrée d'eau de mer dans la conduite).

Par exemple, la conduite flexible selon l'invention peut comprendre, de l'extérieur vers l'intérieur :

- une gaine polymérique externe d'étanchéité,
- au moins une nappe d'armures de traction,
- une voûte de pression,
- une gaine polymérique interne d'étanchéité comprenant un PE-RT réticulé,
- éventuellement une carcasse métallique.

Dans un deuxième exemple, la conduite flexible selon l'invention peut comprendre, de l'extérieur vers l'intérieur :

- une gaine polymérique externe d'étanchéité comprenant un PE-RT réticulé,
- au moins une nappe d'armures de traction,
- une voûte de pression,
- une gaine polymérique interne d'étanchéité,
- éventuellement une carcasse métallique.

Dans un troisième exemple, la conduite flexible selon l'invention peut comprendre, de l'extérieur vers l'intérieur :

- une gaine polymérique externe d'étanchéité,
- au moins une nappe d'armures de traction,
- une voûte de pression,

- une gaine polymérique interne d'étanchéité
- éventuellement une carcasse métallique,

et une ou plusieurs gaine(s) polymérique(s) intermédiaire(s) d'étanchéité comprenant un PE-RT réticulé entre deux couches adjacentes.

La conduite flexible selon l'invention peut également comprendre plusieurs couches (typiquement deux ou trois) comprenant un PE-RT réticulé. Par exemple, la conduite flexible selon l'invention peut comprendre, de l'extérieur vers l'intérieur :

- une gaine polymérique externe d'étanchéité comprenant un PE-RT réticulé,
- au moins une nappe d'armures de traction,
- une voûte de pression,
- une gaine polymérique interne d'étanchéité comprenant un PE-RT réticulé,
- éventuellement une carcasse métallique.

Selon un deuxième objet, l'invention concerne un procédé de préparation de la conduite flexible sous-marine définie ci-dessus, comprenant les étapes suivantes :

a) extrusion pour former une couche comprenant un PE-RT non réticulé, l'extrusion étant éventuellement réalisée sur une autre couche,
b) réticulation du PE-RT non réticulé pour former une couche comprenant un PE-RT réticulé,
c) éventuellement assemblage de la couche obtenue à l'étape b) avec au moins une autre couche.

L'étape a) d'extrusion peut être réalisée par toute méthode connue de l'homme du métier, par exemple en utilisant une extrudeuse mono-vis ou bi-vis.

Lorsque la couche de la conduite flexible comprenant un PE-RT réticulé comprend plusieurs polymères (par exemple un PE-RT réticulé et une autre polyoléfine), le mélange des deux polymères peut être réalisé avant ou pendant l'extrusion.

Typiquement, lors de l'étape a), un mélange comprenant un PE-RT non réticulé, éventuellement une autre polyoléfine et un catalyseur de réticulation est extrudé.

Dans un mode de réalisation, la couche comprenant un PE-RT réticulé de la conduite flexible est une multicouche comprenant plusieurs couches polymériques, où au moins l'une des couches polymériques comprend un PE-RT réticulé. Typiquement, l'étape a) est alors une co-extrusion et le procédé de préparation de la conduite flexible sous-marine comprend alors les étapes suivantes :

a) co-extrusion pour former une multicouche comprenant plusieurs couches polymériques, où au moins l'une des couches polymériques comprend un PE-RT réticulé, la co-extrusion étant éventuellement réalisée sur une autre couche,
b) réticulation du PE-RT non réticulé pour former une couche comprenant un PE-RT réticulé,
c) éventuellement assemblage de la couche obtenue à l'étape b) avec au moins une autre couche.

La nature du catalyseur de réticulation et la nature de l'étape b) de réticulation dépendent bien sûr du type de réticulation souhaité. Des méthodes pour réticuler un polyéthylène sont connues de la littérature, par exemple de Tamboli et al., Indian Journal of Chemical Technology, 11, 2004, 853-864. La réticulation du PE-RT peut être effectuée par voie physique, par exemple par radiations d'électrons, d'UV ou rayons gamma, ou chimique, par exemple par méthode silane (notamment par hydrosilylation), azo ou peroxyde. De préférence, la réticulation du PE-RT est par peroxyde, généralement en présence d'une source de chaleur comme un four à infrarouge.

La détermination du taux de réticulation (ou taux de gel) du PE-RT réticulé est réalisée selon la norme ASTM D2765 révisée en 2011. Le taux de réticulation n'a pas besoin d'atteindre les valeurs maximales obtenues par les différentes méthodes de réticulation décrites ci-dessus pour qu'une amélioration de la résistance au gonflement de la couche en présence de fluides pétroliers soit observée.

La couche de la conduite flexible comprenant un PE-RT réticulé peut comprendre une autre polyoléfine, qui peut être réticulée ou non réticulée. Lorsque l'autre polyoléfine est réticulée, la réticulation de l'autre polyoléfine peut être effectuée avec la même méthode que celle utilisée pour réticuler le PE-RT non réticulé. Typiquement, le procédé de préparation de la conduite flexible sous-marine comprend alors les étapes suivantes :

a) extrusion pour former une couche comprenant un PE-RT non réticulé et une autre polyoléfine réticulable, l'extrusion étant éventuellement réalisée sur une autre couche,
b) réticulation du PE-RT non réticulé et de l'autre polyoléfine réticulable pour former une couche comprenant un PE-RT réticulé et une autre polyoléfine réticulée,
c) éventuellement assemblage de la couche obtenue à l'étape b) avec au moins une autre couche.

La réticulation de l'autre polyoléfine peut également être effectuée avec une méthode différente que celle utilisée pour réticuler le PE-RT non réticulé. Typiquement, le procédé de préparation de la conduite flexible sous-marine comprend alors les étapes suivantes :

a) extrusion pour former une couche comprenant un PE-RT non réticulé et une autre polyoléfine réticulable, l'extrusion étant éventuellement réalisée sur une autre couche,
$b_\alpha$) réticulation du PE-RT non réticulé pour former une couche comprenant un PE-RT réticulé, par exemple par peroxyde,
$b_\beta$) réticulation de l'autre polyoléfine réticulable pour former une couche comprenant une autre polyoléfine réticulée, par exemple par radiations UV ou gamma,
c) éventuellement assemblage de la couche obtenue à l'étape $b_\alpha$) ou $b_\beta$) avec au moins une autre couche,

où les étapes $b_\alpha$) et $b_\beta$) peuvent être effectuées dans n'importe quel ordre.

La couche obtenue à la fin de l'étape b) est typiquement tubulaire, a généralement un diamètre de 50 mm à 600 mm, de préférence de 50 à 400 mm, une épaisseur de 1 mm à 150 mm, préférentiellement de 40 à 100 mm et une longueur de 1 m à 10 km.

Le procédé comprend éventuellement une étape c) d'assemblage de la couche obtenue lors de l'étape b) avec au moins une autre couche pour former la conduite sous-marine flexible, notamment l'une des couches susmentionnées.

Les couches sont ainsi assemblées pour former une conduite flexible sous-marine de type non lié ("unbonded" en langue anglaise), telle que décrite dans les documents normatifs publiés par l'American Petroleum Institute (API), API 17J et API RP 17B.

Selon une première alternative, l'extrusion de l'étape a) n'est pas réalisée sur une autre couche de la conduite flexible, mais de manière indépendante, et la couche obtenue à la fin de l'extrusion est alors éventuellement rapportée et calandrée avec au moins une autre couche lors de l'étape c). Le procédé de préparation de la conduite flexible comprend alors les étapes de :

a) extrusion pour former une couche comprenant un PE-RT non réticulé,
b) réticulation du PE-RT non réticulé pour former une couche comprenant un PE-RT réticulé,
c) éventuellement assemblage de la couche obtenue à l'étape b) avec au moins une autre couche.

Généralement, selon cette première alternative, l'étape c) d'assemblage est effectuée.

Par exemple, lorsque la couche comprenant un PE-RT réticulé obtenue à la fin de l'étape b) est la gaine polymérique interne d'étanchéité, elle est généralement rapportée et calandrée avec une voûte de pression, au moins une nappe d'armures de traction (généralement deux nappes d'armures) et une gaine polymérique externe (comprenant éventuellement un PE-RT réticulé). Cet exemple permet notamment de réaliser des conduites flexibles à passage lisse (« Smooth bore » en anglais).

Selon une seconde alternative, l'extrusion de l'étape a) est réalisée sur une autre couche de la conduite flexible. Le procédé de préparation de la conduite flexible comprend alors les étapes de :

a) extrusion pour former une couche comprenant un PE-RT non réticulé, l'extrusion étant réalisée sur une autre couche,

b) réticulation du PE-RT non réticulé pour former une couche comprenant un PE-RT réticulé,

c) éventuellement assemblage de la couche obtenue à l'étape b) avec au moins une autre couche.

Dans un premier mode de réalisation de cette seconde alternative, l'étape c) est mise en œuvre et le procédé de préparation de la conduite flexible comprend les étapes de :

a) extrusion pour former une couche comprenant un PE-RT non réticulé, l'extrusion étant réalisée sur une autre couche,

b) réticulation du PE-RT non réticulé pour former une couche comprenant un PE-RT réticulé,

c) assemblage de la couche obtenue à l'étape b) avec au moins une autre couche.

Par exemple, lorsque la couche comprenant un PE-RT réticulé obtenue à la fin de l'étape b) est la gaine polymérique interne d'étanchéité, l'extrusion de la gaine interne d'étanchéité (étape a)) est typiquement réalisée sur la carcasse, pour obtenir à la fin de l'étape b) un ensemble (carcasse / gaine polymérique interne d'étanchéité comprenant un PE-RT réticulé) qui sera alors rapporté et calandré avec au moins une autre couche lors de l'étape c), typiquement une voûte de pression, au moins une nappe d'armures de traction (généralement deux nappes d'armures) et une gaine polymérique externe (comprenant éventuellement un PE-RT réticulé). Cet exemple permet notamment de réaliser des conduites flexibles à passage non lisse (« Rough bore » en anglais).

De même, lorsque la couche comprenant un PE-RT réticulé est une gaine polymérique intermédiaire, l'extrusion de la couche est typiquement réalisée sur l'ensemble de couches de la conduite qui sont plus internes que ladite gaine polymérique intermédiaire dans la conduite flexible obtenue par le procédé, pour obtenir un ensemble (gaine polymérique intermédiaire comprenant un PE-RT réticulé / couches de la conduite qui sont plus internes que ladite gaine polymérique intermédiaire dans la conduite flexible obtenue par le procédé) qui sera alors rapporté et calandré avec la ou les autres couches de la conduite qui est(sont) plus externe(s) dans la conduite flexible obtenue par le procédé.

A titre illustratif, si la couche comprenant un PE-RT réticulé est une gaine polymérique intermédiaire entre la voute de pression et une nappe d'armures de traction, l'extrusion de la couche serait typiquement réalisée sur l'ensemble voute de pression / gaine polymérique interne d'étanchéité / éventuelle carcasse (les couches étant listées de l'extérieur vers l'intérieur, l'extrusion étant réalisée sur la couche extérieure de cet ensemble, c'est-à-dire sur la voute de pression), pour obtenir un ensemble (gaine polymérique intermédiaire comprenant un PE-RT réticulé / voute de pression / gaine polymérique interne d'étanchéité / éventuelle carcasse) qui sera alors rapporté et calandré avec au moins une nappe d'armures de traction (généralement deux nappes d'armure) et une gaine polymérique externe.

Selon un autre exemple, si la couche comprenant un PE-RT réticulé est une gaine polymérique intermédiaire entre la(les) nappe(s) d'armures et une couche polymérique (par exemple une couche anti-usure), l'extrusion de la couche serait typiquement réalisée sur l'ensemble au moins une nappe d'armures de traction / voute de pression / gaine polymérique interne d'étanchéité / éventuelle carcasse (les couches étant listées de l'extérieur vers l'intérieur, l'extrusion étant réalisée sur la couche extérieure de cet ensemble, c'est-à-dire sur la voute de pression), pour obtenir un ensemble (gaine polymérique intermédiaire comprenant un PE-RT réticulé / au moins une nappe d'armures de traction / voute de pression / gaine polymérique interne d'étanchéité / éventuelle carcasse) qui sera alors rapporté et calandré avec une gaine polymérique externe.

Dans un second mode de réalisation de cette seconde alternative, le procédé ne comprend pas d'étape c) d'assemblage de la couche obtenue à l'étape b) avec au moins une autre couche, et le procédé de préparation de la conduite flexible comprend les étapes de :

a) extrusion pour former une couche comprenant un PE-RT non réticulé, l'extrusion étant réalisée sur une autre couche,

b) réticulation du PE-RT non réticulé pour former une couche comprenant un PE-RT réticulé.

Par exemple, lorsque la couche comprenant un PE-RT réticulé obtenue à la fin de l'étape b) est la gaine polymérique externe d'étanchéité, l'extrusion de la gaine externe d'étanchéité est typiquement réalisée sur un ensemble de couches : au moins une nappe d'armures de traction (généralement deux nappes d'armures) / voûte de pression / gaine polymérique interne d'étanchéité (comprenant éventuellement un PE-RT réticulé) / éventuellement carcasse (les couches étant listées de l'extérieur vers l'intérieur, l'extrusion étant réalisée sur la couche extérieure de cet ensemble, c'est-à-dire sur une nappe d'armures de traction).

Par ailleurs, dans un mode de réalisation, le procédé permet de préparer une conduite flexible dont les gaines polymériques interne et externe d'étanchéité comprennent toutes les deux un PE-RT réticulé.

Deux procédés de préparation typiques peuvent alors être distingués, selon qu'une conduite flexible à passage lisse ou non lisse soit désirée à la fin du procédé.

Selon un premier procédé particulièrement adapté pour la préparation de conduite flexible à passage lisse, le procédé de préparation d'une conduite flexible comprenant des gaines interne et externe d'étanchéité comprenant un PE-RT réticulé comprend les étapes de :

a1) extrusion pour former une gaine polymérique interne d'étanchéité comprenant un PE-RT non réticulé,

b1) réticulation de la gaine polymérique interne d'étanchéité obtenue à l'étape a1) pour former une gaine polymérique interne d'étanchéité comprenant un PE-RT réticulé,

c) assemblage de la gaine polymérique interne d'étanchéité obtenue à l'étape b1) avec une voûte de pression et au moins une nappe d'armures de traction (généralement deux nappes d'armures),

a2) extrusion pour former une gaine polymérique externe d'étanchéité comprenant un PE-RT non réticulé sur la nappe d'armures de traction,

b2) réticulation de la gaine polymérique externe d'étanchéité obtenue à l'étape a2) pour former une gaine polymérique externe d'étanchéité comprenant un PE-RT réticulé.

Lorsque plusieurs nappes d'armures de traction sont utilisées lors de l'étape c), la nappe d'armure de traction sur laquelle l'extrusion est réalisée lors de l'étape a2) correspond à la nappe d'armure externe.

Selon un second procédé particulièrement adapté pour la préparation de conduite flexible à passage non lisse, le procédé de préparation d'une conduite flexible comprenant des gaines interne et externe d'étanchéité comprenant un PE-RT réticulé comprend les étapes de :

a1) extrusion pour former une gaine polymérique interne d'étanchéité comprenant un PE-RT non réticulé sur une carcasse métallique,

b1) réticulation de la gaine polymérique interne d'étanchéité obtenue à l'étape a1) pour former une gaine polymérique interne d'étanchéité comprenant un PE-RT réticulé,

c) assemblage de l'ensemble (carcasse métallique / gaine polymérique interne d'étanchéité obtenue à l'étape b1)) avec une voûte de pression et au moins une nappe d'armures de traction (généralement deux nappes d'armures),

a2) extrusion pour former une gaine polymérique externe d'étanchéité comprenant un PE-RT non réticulé sur la nappe d'armures de traction,

b2) réticulation de la gaine polymérique externe d'étanchéité obtenue à l'étape a2) pour former une gaine polymérique externe d'étanchéité comprenant un PE-RT réticulé,

Lorsque plusieurs nappes d'armures de traction sont utilisées lors de l'étape c), la nappe d'armure de traction sur laquelle l'extrusion est réalisée lors de l'étape a2) correspond à la nappe d'armure externe.

Selon un troisième objet, l'invention a pour objet une conduite flexible sous-marine susceptible d'être obtenue par le procédé précité.

Selon un quatrième objet, l'invention a pour objet l'utilisation de la conduite flexible sous-marine précitée pour le transport d'hydrocarbures.

Selon un cinquième objet, l'invention a pour objet l'utilisation d'un PE-RT réticulé, notamment tel que défini ci-dessus, dans une couche d'une conduite flexible sous-marine destinée au transport de d'hydrocarbures pour augmenter la résistance de ladite couche au cloquage et/ou pour améliorer sa résistance au gonflement en présence de fluides pétroliers.

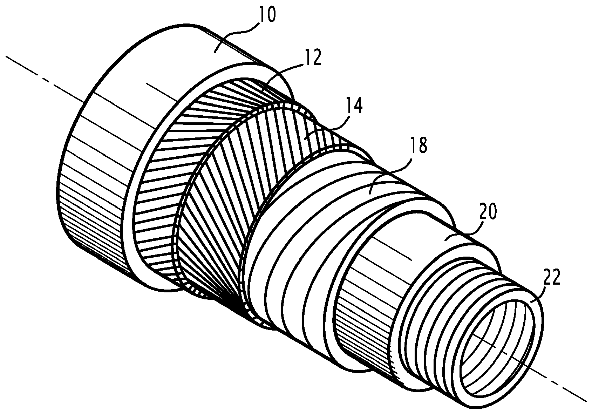

D'autres particularités et avantages de l'invention ressortiront à la lecture de la description faite ci-après de modes de réalisation particuliers de l'invention, donnés à titre indicatif mais non limitatif, en référence à la figure.

La figure est une vue schématique partielle en perspective d'une conduite flexible selon l'invention. Elle illustre une conduite conforme à l'invention comprenant, de l'extérieur vers l'intérieur :

- une gaine polymérique externe d'étanchéité 10,
- une nappe externe d'armure de traction 12,
- une nappe interne d'armure de traction 14 enroulée en sens opposé de la nappe externe 12,
- une voûte de pression 18 de reprise des efforts radiaux générés par la pression des hydrocarbures transportés,
- une gaine polymérique interne d'étanchéité 20, et
- une carcasse interne 22 de reprise des efforts radiaux d'écrasement.

Aucune couche de renforcement métallique et/ou gaine polymérique intermédiaire n'est représentée sur la figure. Comme explicité ci-dessus, on ne sortirait pas du champ de présente invention si la conduite comprenait une ou plusieurs couches de renforcement métallique et/ou gaine(s) polymérique(s) intermédiaire(s). Lorsqu'aucune gaine polymérique intermédiaire n'est présente dans la conduite, comme celle représentée à la figure, c'est (ce sont) la gaine polymérique externe d'étanchéité 10 et/ou la gaine polymérique interne d'étanchéité 20 qui comprend(ennent) un PE-RT réticulé.

Du fait de la présence de la carcasse interne 22, cette conduite est dite à passage non lisse ("rough-bore" en langue anglaise). L'invention pourrait aussi s'appliquer à une conduite dite à passage lisse ("smooth-bore" en langue anglaise), ne comportant pas de carcasse interne.

De même, on ne sortirait pas du champ de la présente invention en supprimant la voûte de pression 18, sous réserve que les angles d'hélice des fils constituant les nappes d'armures 12, 14 soient proches de 55° et en sens opposé.

Les nappes d'armures 12, 14 sont obtenues par enroulement à pas long d'un ensemble de fils en matériau métallique ou composite, de section généralement sensiblement rectangulaire. L'invention s'appliquerait aussi si ces fils avaient une section de géométrie circulaire ou complexe, du type par exemple T autoagrafé. Sur la figure, seules deux nappes d'armures 12 et 14 sont représentées, mais la conduite pourrait aussi comporter une ou plusieurs paires supplémentaires d'armures. La nappe d'armures 12 est dite externe car elle est ici la dernière, en partant de l'intérieur de la conduite, avant la gaine d'étanchéité externe 10.

La conduite flexible peut également comprendre des couches non représentées sur la figure, telles que :

- une frette réalisée par l'enroulement à pas court d'au moins un fil métallique avantageusement de section transversale autour de la voûte de pression 18 pour augmenter la résistance à l'éclatement de la conduite, et/ou

  - une couche de maintien entre la gaine polymérique externe 10 et les nappes d'armures de traction 12 et 14, ou entre deux nappes d'armures de traction, et/ou
  - une ou plusieurs couches anti-usure (" antiwear layer " en anglais) en matériau polymérique en contact soit avec la face interne de la couche de maintien précitée, soit avec sa face externe, soit avec les deux faces, cette couche anti-usure permettant d'éviter que la couche de maintien s'use au contact avec des armures métalliques. Les couches anti-usure, qui sont bien connues de l'homme du métier, sont généralement réalisées par enroulement hélicoïdal d'un ou plusieurs rubans obtenus par extrusion d'un matériau polymérique à base de polyamide, de polyoléfines, ou de PVDF (" polyvinylidene fluoride " en anglais). On pourra aussi se reporter au document WO 2006/120320 qui décrit des couches anti-usure constituées de rubans en polysulfone (PSU), polyethersulfone (PES), polyphenylsulfone (PPSU), polyetherimide (PEI), polytétrafluoroéthylène (PTFE), polyétheréthercétone (PEEK) ou polysulfure de phénylène (PPS).

## Revendications

1. Conduite flexible sous-marine de type non lié destinée au transport d'hydrocarbures comprenant une pluralité de couches dont au moins une couche comprend un polyéthylène à résistance thermique accrue réticulé.

2. Conduite flexible sous-marine selon la revendication 1, dans laquelle le polyéthylène à résistance thermique accrue réticulé est obtenu par réticulation d'au moins un polyéthylène à résistance thermique accrue ayant :

   - une densité comprise entre 0,930 g/cm$^3$ et 0,965 g/cm$^3$, préférentiellement entre 0,935 g/cm$^3$ et 0,960 g/cm$^3$ et encore plus préférentiellement entre 0,940 g/cm$^3$ et 0,955 g/cm$^3$,
   - un melt index mesuré à 190°C sous une masse de 2,16kg compris entre 0,1 g/10 minutes et 15 g/10 minutes, préférentiellement entre 0,1 g/10 minutes et 5 g/10 minutes et de manière encore plus préférentielle entre 0,1 g/10 minutes et 1,5 g/10 minutes,
   - une force de traction au seuil comprise entre 15 et 35 MPa, préférentiellement entre 20 et 30 MPa et encore plus préférentiellement entre 25 et 30 MPa,
   - un allongement à la rupture (selon ASTM D638 révisée en 2010 ou ISO 527-2 révisée en 2012) au moins supérieur à 50%, de manière préférentielle supérieur à 300% et de manière encore plus préférentielle supérieure ou égale à 500%.

3. Conduite flexible sous-marine selon la revendication 1 ou 2, dans laquelle le polyéthylène à résistance thermique accrue réticulé est obtenu par réticulation d'au moins un polyéthylène à résistance thermique accrue obtenu par polymérisation d'éthylène et de 1-hexène.

4. Conduite flexible sous-marine selon l'une quelconque des revendications 1 à 3, dans laquelle le polyéthylène à résistance thermique accrue réticulé est obtenu par réticulation d'un mélange de polyéthylènes à résistance thermique accrue comprenant :

   - un polyéthylène à résistance thermique accrue obtenu par polymérisation d'éthylène et de 1-hexène, et
   - un polyéthylène à résistance thermique accrue obtenu par polymérisation d'éthylène et de 1-octène.

5. Conduite flexible sous-marine selon l'une quelconque des revendications 1 à 4, dont la couche comprenant un polyéthylène à résistance thermique accrue réticulé comprend une autre polyoléfine.

6. Conduite flexible sous-marine selon la revendication 5, dans laquelle l'autre polyoléfine est un polyéthylène à résistance thermique accrue non réticulé.

7. Conduite flexible sous-marine selon la revendication 5, dans laquelle l'autre polyoléfine est un polyéthylène à haut poids moléculaire, notamment un polyéthylène à très haut poids moléculaire, de préférence un polyéthylène à ultra haut poids moléculaire.

8. Conduite flexible sous-marine selon la revendication 7, comprenant une couche comprenant :

- un polyéthylène à ultra haut poids moléculaire, et
- un polyéthylène à résistance thermique accrue réticulé obtenu par réticulation d'au moins un polyéthylène à résistance thermique accrue obtenu par polymérisation d'éthylène et de 1-hexène.

9. Conduite flexible sous-marine selon l'une quelconque des revendications 5 à 8, dans laquelle, dans la couche comprenant un polyéthylène à résistance thermique accrue réticulé et une autre polyoléfine, le rapport massique entre le polyéthylène à résistance thermique accrue réticulé et la somme du polyéthylène à résistance thermique accrue réticulé et de l'autre polyoléfine est supérieur à 50%.

10. Conduite flexible sous-marine selon l'une quelconque des revendications 5 à 8, dans laquelle, dans la couche comprenant un polyéthylène à résistance thermique accrue réticulé et une autre polyoléfine, le rapport massique entre le polyéthylène à résistance thermique accrue réticulé et la somme du polyéthylène à résistance thermique accrue réticulé et de l'autre polyoléfine est inférieur à 50%.

11. Conduite flexible sous-marine selon l'une quelconque des revendications 1 à 10, comprenant, de l'extérieur vers l'intérieur :

- une gaine polymérique externe d'étanchéité (10),
- au moins une nappe d'armures de traction (12, 14),
- une voûte de pression (18),
- une gaine polymérique interne d'étanchéité (20),
- éventuellement une carcasse métallique (22), et éventuellement une ou plusieurs gaine(s) polymérique(s) intermédiaire(s) d'étanchéité entre deux couches adjacentes,
étant entendu qu'au moins l'une de ces couches comprend un polyéthylène à résistance thermique accrue réticulé.

12. Procédé de préparation de la conduite flexible sous-marine selon l'une quelconque des revendications 1 à 11, comprenant les étapes suivantes :

a) extrusion pour former une couche comprenant un PE-RT non réticulé, l'extrusion étant éventuellement réalisée sur une autre couche,
b) réticulation du PE-RT non réticulé pour former une couche comprenant un PE-RT réticulé,
c) éventuellement assemblage de la couche obtenue à l'étape b) avec au moins une autre couche.

13. Procédé de préparation selon la revendication 12, dans lequel, lors de l'étape b), la réticulation du PE-RT est effectuée par peroxyde.

14. Utilisation d'une conduite flexible sous-marine selon l'une quelconque des revendications 1 à 11 pour le transport d'hydrocarbures.

15. Utilisation d'un polyéthylène à résistance thermique accrue réticulé dans une couche d'une conduite flexible sous-marine destinée au transport d'hydrocarbures pour augmenter la résistance de ladite couche au cloquage et/ou pour améliorer sa résistance au gonflement en présence de fluides pétroliers.

**Patentansprüche**

1. Flexible Untersee-Leitung des unverbundenen Typs, die für den Transport von Kohlenwasserstoffen bestimmt ist, aufweisend eine Mehrzahl von Schichten, von denen wenigstens eine Schicht ein vernetztes Polyethylen mit einem erhöhten Wärmewiderstand aufweist.

2. Flexible Untersee-Leitung gemäß Anspruch 1, wobei das vernetzte Polyethylen mit erhöhtem Wärmewiderstand erlangt ist durch Vernetzung wenigstens eines Polyethylens mit erhöhtem Wärmewiderstand, das hat:

- eine Dichte, die zwischen 0,930 g/cm$^3$ und 0,965 g/cm$^3$, bevorzugt zwischen 0,935 g/cm$^3$ und 0,960 g/cm$^3$ und noch bevorzugter zwischen 0,940 g/cm$^3$ und 0,955 g/cm$^3$ beträgt,
- einen Schmelzindex, der gemessen bei 190°C bei einer Masse von 2,16kg beträgt zwischen 0,1 g/10 Minuten und 15 g/10 Minuten, bevorzugt zwischen 0,1 g/ 10 Minuten und 5 g/10 Minuten und noch bevorzugter zwischen 0,1 g/10 Minuten und 1,5 g/10 Minuten,
- eine Zugkraft-Schwelle, die zwischen 15-35 MPa, bevorzugt zwischen 20 und 30 MPa und noch bevorzugter zwischen 25 und 30 MPa beträgt,
- eine Reißdehnung (gemäß ASTM D638 revidiert in 2010 oder ISO 527-2 revidiert in 2012) zumindest größer 50%, bevorzugt größer 300% und noch bevorzugter größer oder gleich 500%.

3. Flexible Untersee-Leitung gemäß Anspruch 1 oder 2, wobei das vernetzte Polyethylen mit erhöhtem Wärmewiderstand erlangt ist durch Vernetzung wenigstens eines Polyethylens mit erhöhtem Wärmewiderstand, das durch Polymerisation von Ethylen und 1-Hexen erlangt ist.

**4.** Flexible Untersee-Leitung gemäß einem der Ansprüche 1 bis 3, wobei das vernetze Polyethylen mit erhöhtem Wärmewiderstand erlangt ist durch Vernetzung einer Mischung aus Polyethylenen mit erhöhtem Wärmewiderstand, die aufweist:

- ein Polyethylen mit erhöhtem Wärmewiderstand, das durch Polymerisation von Ethylen und 1-Hexen erlangt ist, und
- ein Polyethylen mit erhöhtem Wärmewiderstand, das durch Polymerisation von Ethylen und 1-Okten erlangt ist.

**5.** Flexible Untersee-Leitung gemäß irgendeinem der Ansprüche 1 bis 4, wobei die Schicht, die ein vernetztes Polyethylen mit erhöhtem Wärmewiderstand aufweist, ein anderes Polyolefin aufweist.

**6.** Flexible Untersee-Leitung gemäß Anspruch 5, wobei das andere Polyolefin ein nicht vernetztes Polyethylen mit erhöhtem Wärmewiderstand ist.

**7.** Flexible Untersee-Leitung gemäß Anspruch 5, wobei das andre Polyolefin ein Polyethylen mit hohem Molekulargewicht, insbesondere ein Polyethylen mit sehr hohem Molekulargewicht, bevorzugt ein Polyethylen mit ultrahohem Molekulargewicht ist.

**8.** Flexible Untersee-Leitung gemäß Anspruch 7, wobei eine Schicht aufweist:

- ein Polyethylen mit ultrahohem Molekulargewicht und
- ein vernetztes Polyethylen mit erhöhtem Wärmewiderstand, das erlangt ist durch Vernetzung wenigstens eines Polyethylens mit erhöhtem Wärmewiderstand, das erlangt ist durch Polymerisation von Ethylen und 1-Hexen.

**9.** Flexible Untersee-Leitung gemäß irgendeinem der Ansprüche 5 bis 8, wobei in der Schicht, die ein vernetztes Polyethylen mit erhöhtem Wärmewiderstand und ein anderes Polyolefin aufweist, das Massenverhältnis zwischen dem vernetzten Polyethylen mit erhöhtem Wärmewiderstand und der Summe des vernetzten Polyethylens mit erhöhtem Wärmewiderstand und dem anderen Polyolefin größer als 50% ist.

**10.** Flexible Untersee-Leitung gemäß irgendeinem der Ansprüche 5 bis 8, wobei in der Schicht, die ein vernetztes Polyethylen mit erhöhtem Wärmewiderstand und ein anderes Polyolefin aufweist, das Massenverhältnis zwischen dem vernetzten Polyethylen mit erhöhtem Wärmewiderstand und der Summe des vernetzten Polyethylens mit erhöhtem Wärmewiderstand und dem anderen Polyolefin kleiner als 50% ist.

**11.** Flexible Untersee-Leitung gemäß irgendeinem der Ansprüche 1 bis 10, aufweisend von außen nach innen hin:

- eine äußere, polymere Dichthülle (10),
- wenigstens eine Zugverstärkungen-Einlage (12, 14),
- eine Druckhülse (18),
- eine innere, polymere Dichthülle (20),
- ggf. eine Metallkarkasse (22),
und ggf. eine oder mehrere polymere Zwischen-Dichthülle(n) zwischen zwei benachbarten Schichten,
wobei wenigstens eine dieser Schichten ein vernetztes Polyethylen mit erhöhtem Wärmewiderstand aufweist.

**12.** Verfahren zur Erstellung der flexiblen Untersee-Leitung gemäß irgendeinem der Ansprüche 1 bis 11, aufweisend die folgenden Schritte:

a) Extrudieren zum Bilden einer Schicht, die ein nicht vernetztes PE-RT aufweist, wobei das Extrudieren ggf. auf einer anderen Schicht realisiert wird,
b) Vernetzen des nicht vernetzten PE-RT zum Bilden einer Schicht, die ein vernetztes PE-RT aufweist,
c) ggf. Zusammenfügen der im Schritt b) erlangten Schicht mit einer anderen Schicht.

**13.** Verfahren zur Erstellung gemäß Anspruch 12, wobei während des Schritts b) das Vernetzen des PE-RT mittels Peroxid bewirkt wird.

**14.** Verwendung einer flexiblen Untersee-Leitung gemäß irgendeinem der Ansprüche 1 bis 11 zum Transport von Kohlenwasserstoffen.

**15.** Verwendung eines vernetzten Polyethylens mit erhöhtem Wärmewiderstand in einer Schicht einer flexiblen Untersee-Leitung, die für den Transport von Kohlenwasserstoffen bestimmt ist, zum Erhöhen des Widerstands der Schicht gegen Ausbauchung und/oder zum Erhöhen ihres Widerstands gegen Aufblähung in Anwesenheit von Erdölfluiden.

**Claims**

**1.** Flexible underwater pipe of the unbonded type, intended for the transport of hydrocarbons, comprising a plurality of layers, at least one layer of which comprises a crosslinked polyethylene with raised temperature resistance.

**2.** Flexible underwater pipe according to claim 1, in which the crosslinked polyethylene with raised temperature resistance is obtained by crosslinking of at least one polyethylene with raised temperature resistance having:

> - a density between 0.930 g/cm$^3$ and 0.965 g/cm$^3$, preferably between 0.935 g/cm$^3$ and 0.960 g/cm$^3$ and even more preferably between 0.940 g/cm$^3$ and 0.955 g/cm$^3$,
> - a melt index measured at 190°C under a mass of 2.16 kg between 0.1 g/10 minutes and 15 g/10 minutes, preferably between 0.1 g/10 minutes and 5 g/10 minutes and even more preferably between 0.1 g/10 minutes and 1.5 g/10 minutes,
> - a tensile yield strength between 15 and 35 MPa, preferably between 20 and 30 MPa and even more preferably between 25 and 30 MPa,
> - a breaking elongation (according to ASTM D638, revised in 2010 or ISO 527-2, revised in 2012) at least greater than 50%, preferably greater than 300% and even more preferably greater than or equal to 500%.

3. Flexible underwater pipe according to claim 1 or 2, in which the crosslinked polyethylene with raised temperature resistance is obtained by crosslinking of at least one polyethylene with raised temperature resistance obtained by polymerisation of ethylene and of 1-hexene.

4. Flexible underwater pipe according to any of the claims 1 to 3, in which the crosslinked polyethylene with raised temperature resistance is obtained by crosslinking of a mixture of polyethylenes with raised temperature resistance comprising:

> - a polyethylene with raised temperature resistance obtained by polymerisation of ethylene and of 1-hexene, and
> - a polyethylene with raised temperature resistance obtained by polymerisation of ethylene and of 1-octene.

5. Flexible underwater pipe according to any of the claims 1 to 4, the layer of which, comprising a crosslinked polyethylene with raised temperature resistance, comprises another polyolefin.

6. Flexible underwater pipe according to claim 5, in which the other polyolefin is a non-crosslinked polyethylene with raised temperature resistance.

7. Flexible underwater pipe according to claim 5, in which the other polyolefin is a high molecular weight polyethylene, in particular a very high molecular weight polyethylene, preferably an ultra high molecular weight polyethylene.

8. Flexible underwater pipe according to claim 7, comprising a layer comprising:

> - an ultra high molecular weight polyethylene, and
> - a crosslinked polyethylene with raised temperature resistance obtained by crosslinking of at least one polyethylene with raised temperature resistance obtained by polymerisation of ethylene and of 1-hexene.

9. Flexible underwater pipe according to any of the claims 5 to 8, in which, in the layer comprising a crosslinked polyethylene with raised temperature resistance and another polyolefin, the mass ratio between the crosslinked polyethylene with raised temperature resistance and the sum of the crosslinked polyethylene with raised temperature resistance and the other polyolefin is greater than 50%.

10. Flexible underwater pipe according to any of the claims 5 to 8, in which, in the layer comprising a crosslinked polyethylene with raised temperature resistance and another polyolefin, the mass ratio between the crosslinked polyethylene with raised temperature resistance and the sum of the crosslinked polyethylene with raised temperature resistance and the other polyolefin is less than 50%.

11. Flexible underwater pipe according to any of the claims 1 to 10, comprising, from the outside to the inside:

> - a polymeric external sealing sheath (10),
> - at least one traction sheathing ply (12, 14),
> - a pressure vaulting (18),
> - a polymeric internal sealing sheath (20),
> - possibly a metallic carcass (22),
> and possibly one or more polymeric intermediate sealing sheath(s) between two adjacent layers,
> it being understood that at least one of these layers comprises a crosslinked polyethylene with raised temperature resistance.

12. Method of preparing the flexible underwater pipe according to any of the claims 1 to 11, comprising the following steps:

> a) extrusion in order to form a layer comprising a non-crosslinked PE-RT, the extrusion being produced possibly on another layer,
> b) crosslinking of the non-crosslinked PE-RT in order to form a layer comprising a crosslinked PE-RT,
> c) possibly assembly of the layer obtained in step b) with at least one other layer.

13. Method of preparation according to claim 12, in which, during step b), the crosslinking of the PE-RT is effected by peroxide.

14. Use of a flexible underwater pipe according to any of the claims 1 to 11, for the transport of hydrocarbons.

15. Use of a crosslinked polyethylene with raised temperature resistance in a layer of a flexible underwater pipe intended for the transport of hydrocarbons in order to increase the resistance of said layer to blistering and/or in order to improve its resistance to swelling in the presence of petroleum fluids.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014020053 A
- WO 2014020052 A
- EP 0416815 A
- WO 9403509 A
- EP 0100879 A
- WO 2006120320 A

**Littérature non-brevet citée dans la description**

- **KAWAGUCHI et al.** development of low-cost and recyclable of polyethylene pipes for heating. *international gas union research conférence,* 2008
- **TAMBOLI et al.** *Indian Journal of Chemical Technology,* 2004, vol. 11, 853-864